# EUROPÄISCHE PATENTSCHRIFT

(11) **EP 1 175 322 B1**
(45) Veröffentlichungstag und Bekanntmachung des Hinweises auf die Patenterteilung: **03.09.2003**
(21) Anmeldenummer: 00910830.9
(22) Anmeldetag: 14.03.2000
(51) Int. Cl.: B60T 13/52, B60T 13/74, B60T 7/10

(54) **BREMSVORRICHTUNG FÜR FAHRZEUGE**
BRAKING DEVICE FOR VEHICLES
DISPOSITIF DE FREINAGE POUR VEHICULES

(30) Priorität: 30.04.1999 DE 19919878
(43) Veröffentlichungstag der Anmeldung: 30.01.2002
(73) Patentinhaber: DaimlerChrysler AG, 70567 Stuttgart (DE)
(72) Erfinder: RÖSS, Karl-Heinz, D-73061 Ebersbach (DE); SCHOPPER, Michael, D-70192 Stuttgart (DE)
(86) Internationale Anmeldenummer: EP0002248
(87) Internationale Veröffentlichungsnummer: WO00066410

(56) Entgegenhaltungen:
- EP-B- 0 595 961
- DE-A- 4 239 386

## Beschreibung

Die Erfindung betrifft eine Bremsvorrichtung für Fahrzeuge, umfassend eine von dem Fahrzeugführer bedienbare Betätigungseinrichtung, durch welche Radbremseinrichtungen über eine Übertragungseinrichtung betätigbar sind, wobei die Übertragungseinrichtung wenigstens zwei voneinander getrennte, unterschiedlichen Radbremseinrichtungen zugeordnete Bremskreise umfaßt. Die Bremsvorrichtung umfaßt eine von dem Fahrzeugführer bedienbare Betätigungseinrichtung, durch welche Radbremseinrichtungen des Fahrzeugs über eine Übertragungseinrichtung betätigbar sind.

Aus der Druckschrift EP 595 961 B1 ist eine derartige Bremsvorrichtung für Kraftfahrzeuge mit elektrischem Antrieb bekannt. Es sind drei Bremskreise vorgesehen. Ein erster Bremskreis umfaßt einen pedalbetätigten Bremsdruckgeber und auf die nicht angetriebenen Räder wirkende Reibungsbremsen, ein zweiter Bremskreis ist durch ein direkt oder indirekt mit dem Bremspedal gekoppeltes, auf die angetriebenen Räder wirkendes elektroregeneratives Bremssystem gebildet und ein dritter Bremskreis umfaßt ebenfalls auf die angetriebenen Räder wirkende, mit dem Bremspedal gekoppelte Reibungsbremsen. Die Verwendung von elektrischen Aktuatoren ist nicht vorgesehen.

Bestehende gesetzliche Vorschriften erfordern eine zumindest zweikreisige Übertragungseinrichtung.

Verschiedene Bremskreisaufteilungen sind beispielsweise aus der Publikation "Kraftfahrtechnisches Taschenbuch" der Robert Bosch GmbH, VDI Verlag, 22. Auflage, 1995, Seiten 612 ff bekannt.

Durchgesetzt haben sich im wesentlichen eine II-Aufteilung, eine sogenannte Vorderachs-/Hinterachs-Aufteilung, bei der ein Bremskreis auf die Vorderachse und ein Bremskreis auf die Hinterachse wirkt, sowie eine sogenannte X-Aufteilung, eine diagonale Aufteilung, bei der jeder Bremskreis auf ein Vorderrad und auf ein diagonal gegenüberliegendes Hinterrad wirkt.

Darüber hinaus existieren noch die sogenannte HI-Aufteilung, eine Vorder- und Hinterachs-/Vorderachsaufteilung, bei der ein Bremskreis auf die Vorderachse und auf die Hinterachse und ein Bremskreis nur auf die Hinterachse wirkt, die LL-Aufteilung, eine Vorderachs- und Hinterrad-/Vorderachs- und Hinterrad-Aufteilung, bei der jeder Bremskreis auf die Vorderachse und auf ein Hinterrad wirkt, und die HH-Aufteilung, eine Vorderund Hinterachs-/Vorder- und Hinterachs-Aufteilung, bei der jeder Bremskreis auf die Vorderachse und auf die Hinterachse wirkt.

Die X-Aufteilung kommt insbesondere bei vorderachslastigen Fahrzeugen zum Einsatz. Die zukünftige Entwicklung von Fahrzeugbremsvorrichtungen wird in Richtung elektromechanischer Radbremseinrichtungen verlaufen. Derartige elektromechanische Radbremseinrichtungen haben den Vorteil, daß sie keine Hydraulikflüssigkeit benötigen und insoweit "trockene" Radbremseinrichtungen sind, die insbesondere auch im Hinblick auf Umweltgesichtspunkte sehr vorteilhaft sind. Darüber hinaus sind sie sehr vorteilhaft elektrisch durch brake-by-wire Systeme ansteuerbar.

Bei Fahrzeugen mit einer X-Aufteilung, d.h. mit einer Diagonalkreisaufteilung besteht das Problem, daß elektromechanische Radbremseinrichtungen an der Hinterachse nicht ohne weiteres mit hydraulischen Radbremseinrichtungen an der Vorderachse kombiniert werden können, da durch eine solche Kombination die Zweikreisigkeit der Bremsanlage, die für jeden der beiden Kreise das gleiche Medium, also beispielsweise ein hydraulisches oder ein elektromechanisches erfordert, nicht gewährleistet wäre. Bei der Anordnung elektromechanischer Bremsen an der Hinterachse würde jeder der diagonal angeordneten Bremskreise eine Kombination aus einer hydraulischen Vorderradbremse und einer elektromechanischen Hinterradbremse umfassen. So wäre beispielsweise bei einem vollständigen Ausfall der elektromechanischen Radbremsen die ordnungsgemäße Funktion beider Bremskreise nicht mehr vollständig gewährleistet, da die beiden elektromechanischen Hinterradbremsen Teil jedes der beiden Bremskreise sind.

Ausgehend von einer gattungsgemäßen Bremsvorrichtung soll eine optimierte Einsetzbarkeit von elektromechanischen Radbremseinrichtungen ermöglicht werden.

Diese Aufgabe wird durch eine Bremsvorrichtung für Fahrzeuge der eingangs beschriebenen Art erfindungsgemäß durch die Merkmale des Anspruchs 1 gelöst. Durch die Ausbildung der Übertragungseinrichtung als Dreikreis-Bremssystem, bei dem jeweils ein Bremskreis einem Vorderrad zugeordnet ist und bei dem ein dritter Bremskreis den Hinterrädern zugeordnet ist, an denen durch elektrische Aktuatoren betätigbare Radbremseinrichtungen vorgesehen sind, ist die gesetzliche Mindestverzögerung auch bei vorderachslastigen Fahrzeugen realisierbar.

Die den Vorderrad-Radbremseinrichtungen zugeordneten Kreise umfassen vorzugsweise einen Bremskraftverstärker und einen Hauptbremszylinder, durch den zwei jeweils einem Vorderrad zugeordnete hydraulische Radbremseinheiten betätigbar sind. Besonders vorteilhaft hierbei ist, daß die Bremskraftverstärker wesentlich kleiner ausgelegt werden können, als dies bei herkömmlichen Bremsvorrichtungen für Fahrzeuge der Fall ist.

Die Stärke der Betätigung der Hinterradbremseinrichtungen erfolgt vorzugsweise direkt durch eine Fahrerwunscherfassung am Bremspedal oder mittels des Bremsdrucks, der in den den Vorderrad-Radbremseinrichtungen zugeordneten Kreisen herrscht. Die beschriebene Bremseinrichtung hat den Vorteil, daß sie auf kostengünstige Weise realisierbar ist, daß sie darüber hinaus sehr kompakt baut und daß beispielsweise im Vergleich zu brake-by-wire Systemen kein redundantes Bordnetz, keine redundante Signalverarbeitung und keine redundante Elektronik erforderlich ist.

Der dritte Bremskreis ist vorzugsweise ferner auch manuell betätigbar. Hierdurch ist eine Feststellbremsfunktion realisierbar.

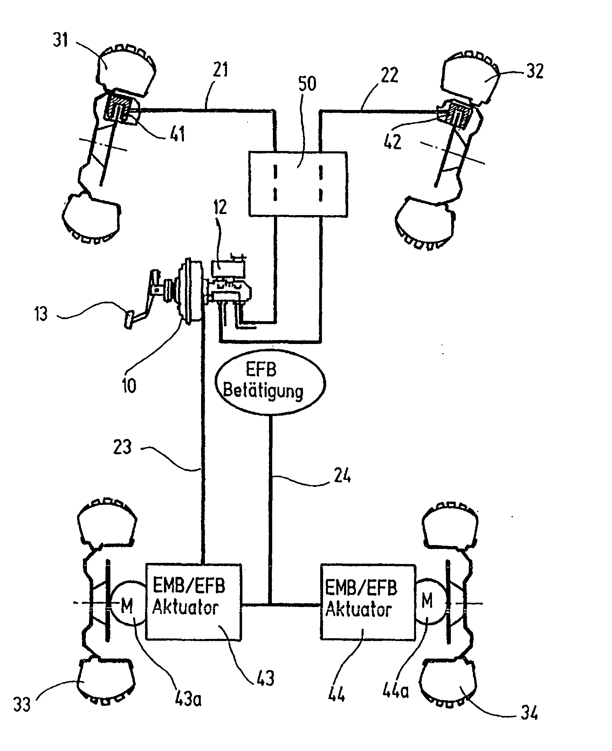

Weitere Vorteile und Merkmale der Erfindung sind Gegenstand der nachfolgenden Beschreibung sowie der zeichnerischen Darstellung eines Ausführungsbeispiels der Erfindung, welches schematisch in der Figur dargestellt ist.

Eine Bremseinrichtung für Fahrzeuge, dargestellt in der Figur, umfaßt einen Unterdruckbremskraftverstärker 10, durch den ein Hauptbremszylinder 12 betätigbar ist. Von dem Hauptbremszylinder 12 gehen zwei separate Bremskreise 21, 22 zu jeweils einem Vorderrad 31, 32 aus. An den Vorderrädern 31, 32 sind jeweils hydraulische Radbremseinrichtungen 41, 42 angeordnet, die über die beiden getrennten Bremskreise 21, 22 mittels eines elektronischen Steuergeräts 50 gesteuert ansteuerbar sind. Der Unterdruckbremskraftverstärker 10 wird durch ein Bremspedal 13 auf an sich bekannte Weise betätigt.

Die Bremseinrichtung umfaßt eine weitere Übertragungseinrichtung in Form eines dritten, elektrischen Bremskreises 23, durch den an den Hinterrädern 33, 34 angeordnete elektrisch betätigbare Aktuatoren 43, 44, welche jeweils über einen Motor 43a, 44a elektromechanische Bremseinrichtungen, in der Figur mit EMB abgekürzt, betätigen, ansteuerbar sind. Angesteuert werden diese elektromechanischen Radbremseinheiten 43, 43a, 44, 44a entweder direkt durch eine Fahrerwunscherfassung am Pedal 13, oder über den Bremsdruck der Vorderachse, wie es in der Figur schematisch dargestellt ist.

Beim Ausfall eines Vorderachskreises verbleiben noch drei Radbremseinheiten, um eine Restbremswirkung zu erzielen.

Ferner ist, wie in der Figur schematisch dargestellt ist, eine elektromechanische Feststellbremse, in der Figur mit EFB abgekürzt, vorgesehen, welche auf die elektromechanischen Hinterrad-Radbremseinheiten 43, 43a sowie 44, 44a wirkt.

## Patentansprüche

1. Bremsvorrichtung für Fahrzeuge, umfassend eine von dem Fahrzeugführer bedienbare Betätigungseinrichtung (10, 12, 13), durch welche Radbremseinrichtungen (41, 42, 43, 43a, 44, 44a) über eine Übertragungseinrichtung betätigbar sind, wobei die Übertragungseinrichtung wenigstens zwei voneinander getrennte, unterschiedlichen Radbremseinrichtungen zugeordnete Bremskreise (21, 22, 23) umfaßt,
**dadurch gekennzeichnet,**
**daß** ein erster Bremskreis (21) und ein zweiter Bremskreis (22) jeweils einer Vorderrad-Radbremseinrichtung (41, 42) zugeordnet ist und ein dritter Bremskreis (23) durch elektrische Aktuatoren betätigbaren Hinterrad-Radbremseinrichtungen zugeordnet ist.

2. Bremsvorrichtung nach Anspruch 1,
**dadurch gekennzeichnet,**
**daß** die den Vorderrad-Radbremseinrichtungen zugeordneten Bremskreise (21, 22) einen Bremskraftverstärker (10) und einen Hauptbremszylinder (12) umfassen, durch den zwei jeweils einem Vorderrad (31, 32) zugeordnete hydraulische Radbremseinrichtungen (41, 42) betätigbar sind.

3. Bremsvorrichtung nach Anspruch 1 oder 2,
**dadurch gekennzeichnet,**
**daß** die Stärke der Betätigung der Hinterrad-Radbremseinrichtungen (43, 44) in Abhängigkeit von dem Bremsdruck, der in den den Vorderrädern (31, 32) zugeordneten Bremskreisen (21, 22) herrscht, oder in Abhängigkeit vom Fahrerwunsch erfolgt.

4. Bremsvorrichtung nach einem der Ansprüche 1 bis 3,
**dadurch gekennzeichnet,**
**daß** der dritte Bremskreis zur Realisierung einer Feststellbremse auch manuell betätigbar ist.

## Claims

1. A braking device for vehicles comprising an actuating device (10, 12, 13) operable by the driver of the vehicle by means of which wheel braking devices (41, 42, 43, 43a, 44, 44a) can be actuated via a transmission device, said transmission device comprising at least two separate brake circuits (21, 22, 23) associated with different wheel braking devices,
**characterised in that**
a first brake circuit (21) and a second brake circuit (22) are each associated with a front wheel wheel braking device (41, 42) and a third braking circuit (23) is associated with rear wheel wheel braking devices which can be actuated by means of electrical actuators.

2. A braking device in accordance with claim 1,
**characterised in that**
the brake circuits (21, 22) associated with the front wheel wheel braking devices comprise a power brake (10) and a main brake cylinder (12) by mean of which two hydraulic wheel braking devices (41, 42) each associated with a front wheel (31, 32) can be actuated.

3. A braking device in accordance with claim 1 or 2,
**characterised in that**
the force of actuation of the rear wheel wheel braking devices (43, 44) is determined dependent on the braking pressure prevailing in the brake circuits (21, 22) associated with the front wheels (31, 32), or dependent on the driver's desired braking force.

4. A braking device in accordance with one of claims 1 to 3,
**characterised in that**
the third brake circuit can also be actuated manually to provide a parking brake.

## Revendications

1. Dispositif de freinage pour des véhicules, comprenant un dispositif d'actionnement (10, 12, 13), pouvant étre manoeuvré par le conducteur du véhicule et au moyen duquel des dispositifs de freinage de roue (41, 42, 43, 43a, 44, 44a) -sont susceptibles d'être actionnés par l'intermédiaire d'un dispositif de transmission, le dispositif de transmission comprenant au moins deux circuits de freinage (21, 22, 23) séparés l'un de l'autre, associés à des dispositifs de freinage de roue différents, **caractérisé en ce qu'**un premier circuit de freinage (21) et un deuxième circuit de freinage (22) sont chacun associés à un dispositif de freinage de roue avant (41, 42), et un troisième circuit de freinage (23) est associé à des dispositifs de freinage de roue arrière susceptibles d'être actionnés par des actionneurs électriques.

2. Dispositif de freinage selon la revendication 1, **caractérisé en ce que** les circuits de freinage (21, 22), associés au dispositif de freinage de roue avant, comprennent un amplificateur de force de freinage (10) et un maître-cylindre de frein (12), au moyen duquel deux dispositifs de freinage de roue (41, 42) hydrauliques, associés chacun à une roue avant (31, 32), sont susceptibles d'être actionnés.

3. Dispositif de freinage selon la revendication 1 ou 2, **caractérisé en ce que** la force de l'actionnement des dispositifs de freinage de roue arrière (43, 44) dépend de la pression de freinage qui règne dans les circuits de freinage associés aux roues avant (31, 32), ou bien du souhait du conducteur (21, 22).

4. Dispositif de freinage selon l'une des revendications 1 à 3, **caractérisé en ce que** le troisième circuit de freinage peut être actionné également manuellement, pour réaliser un frein de stationnement.
